(19) **Europäisches Patentamt / European Patent Office / Office européen des brevets**

(11) **EP 4 725 717 A1**

(12) **EUROPEAN PATENT APPLICATION**
published in accordance with Art. 153(4) EPC

(43) Date of publication:
**15.04.2026 Bulletin 2026/16**

(21) Application number: **24792998.7**

(22) Date of filing: **17.04.2024**

(51) International Patent Classification (IPC):
*B60C 11/24* (2006.01)  *G01C 21/10* (2006.01)
*B60C 23/04* (2006.01)  *B60C 23/06* (2006.01)
*G06F 17/11* (2006.01)

(52) Cooperative Patent Classification (CPC):
**B60C 11/24; B60C 23/04; B60C 23/06;
G01C 21/10; G06F 17/11**

(86) International application number:
**PCT/KR2024/005143**

(87) International publication number:
**WO 2024/219813 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.04.2023 KR 20230049842
29.06.2023 KR 20230084566
29.06.2023 KR 20240037093**

(71) Applicant: **HANKOOK TIRE & TECHNOLOGY CO.,
LTD
Gyeonggi-do 13494 (KR)**

(72) Inventors:
• **LEE, Sung Woo
  Daejeon 34127 (KR)**
• **LEE, Ho Jong
  Daejeon 34127 (KR)**
• **KIM, Young Soo
  Daejeon 34127 (KR)**
• **KIM, Beom Soo
  Daejeon 34127 (KR)**
• **KIM, Min Tae
  Daejeon 34127 (KR)**
• **JEONG, Da Sol
  Daejeon 34127 (KR)**
• **KIM, Seung Taek
  Daejeon 34127 (KR)**
• **CHOI, Sei Bum
  Daejeon 34127 (KR)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **TIRE WEAR ESTIMATION DEVICE AND WEAR ESTIMATION METHOD**

(57)    A tire wear estimation method according to an embodiment of the present invention comprises: a first step in which a calculation unit for performing calculations filters data collected by a data collection unit and tracks an effective rolling radius (ERR); a second step in which the calculation unit corrects the ERR on the basis of a contact ratio; a third step in which the calculation unit checks whether the ERR increases; a fourth step in which the calculation unit generates a wear rate as a chart while the ERR increases; a fifth step in which the calculation unit outputs wear if the ERR increases; a sixth step in which the calculation unit corrects the ERR on the basis of the contact ratio when the ERR decreases; a seventh step in which the calculation unit estimates tire wear by using the linear relationship between the ERR and a tire wear amount at a portion in which the ERR decreases; and an eighth step in which the calculation unit outputs wear if the ERR decreases.

FIG 4

(a)

(b)

Description

[TECHNICAL FIELD]

Embodiments of the invention relate generally to a tire wear estimation device and a wear estimation method, and more specifically, to a tire wear estimation device that conveniently diagnoses the wear state of a tire to enable optimal vehicle control considering the tire's wear condition, and a tire wear estimation method that converts the tire's air pressure and load into an effective rolling radius(Effective Rolling Radius, ERR, hereinafter referred to as ERR) and contract ratio obtained from the tire's linear velocity and rotational speed, and estimates tire wear based on the correlation between ERR and the tire wear amount.

[BACKGROUND ART]

Generally, tires support the entire load of a vehicle, absorb shocks from the road surface through their cushioning action, and enable the vehicle's basic driving, stopping, and turning functions through friction between the road surface and the tire.

The part of the tire that contacts the road surface is called the tread. After being mounted on a vehicle, the tread wears down over time due to contact with the ground during driving.

When tread wear occurs, it can lead to problems where the vehicle's steering and braking performance are not properly maintained. Severe tread wear not only exposes the vehicle to risks like punctures but can also cause the tire to burst in extreme cases.

In other words, tires are the only vehicle component in direct contact with the road surface, directly affecting turning and braking performance. Worn tires can fail to deliver adequate braking and turning performance, making tire wear a critical factor for vehicle safety. Specifically, increased braking distance due to tire wear can directly lead to vehicle accidents.

Therefore, checking tire wear and replacing tires at the appropriate time to prevent accidents caused by tire blowouts is an important safety measure for driving. However, most drivers lack basic knowledge about tires and are often unaware of their wear condition. Consequently, they continue driving with tires beyond their wear limit, exposing themselves to the risk of accidents.

Methods for estimating tire wear include utilizing vehicle signals and various additional sensors.

Methods utilizing vehicle signals flowing through the vehicle CAN-bus are difficult to access outside of vehicle manufacturers and have limitations when installing additional devices on vehicles already in production.

Estimation methods based on vehicle dynamics models mostly require large amounts of information, limiting their technological application. Methods using additional sensors besides vehicle signals to estimate tire wear are determined by price and installation difficulty based on the type and location of the additional sensors. For example, methods using the acceleration of the vehicle's hub may require an expert to install the sensor, potentially increasing installation costs.

Consequently, most tire manufacturers incorporate wear indicators into the tire's circumference or within the tire grooves to enable drivers to identify when tires need replacement and take appropriate action based on wear condition.

However, to check tire wear and lifespan, drivers must visually inspect the wear indicator markings themselves.

If the driver does not periodically check the tire wear level, there is a risk that severely worn tires may not be replaced, potentially leading to major accidents caused by the worn tires.

Furthermore, when drivers rely solely on visual inspection, objective judgment regarding the optimal replacement timing is difficult. It also requires individually checking the wear level on each wheel of the vehicle. Furthermore, existing tire wear indicators merely mark the wear limit, indicating only when replacement is necessary. They provide no information about the actual degree of tread wear. Consequently, it is impossible to predict the tire replacement timing in advance.

U.S. patent application publication No. 2021/0302272 discloses a method for estimating tire wear by analyzing pressure and acceleration waveform characteristics measured by a tire mounted sensor. However, this method merely utilizes the correlation between the effective rolling radius and the amount of tire wear, and it excludes the effects of tire pressure and the load applied to the tire, which actually influence tire wear during driving. This prevents accurate wear measurement. Furthermore, especially during the early stages of tire wear progression, the effective rolling radius is unstable and irregular, making it even more difficult to achieve accurate wear measurement.

Korean Patent No. 10-1741730(Title of Invention: Vehicle Tire Monitoring System and Its Control Method) discloses a tire monitoring system comprising: a pressure measurement unit for measuring the pressure of tires mounted on a vehicle; a mileage measurement unit for measuring the mileage of the tires; a communication unit for receiving tire wear data from a tire database; and a control unit for calculating the wear level of the tires mounted on the vehicle based on the measured tire pressure, the measured mileage, and the received wear data. and a control unit that alerts the user if the calculated wear level exceeds a preset threshold.

The above information disclosed in this background section is only for understanding of the background of the inventive concepts, and, therefore, it may contain information that does not constitute prior art.

(Patent Document 1) U.S. patent application publication No. 2021/0302272

(Patent Document 2) Korean Patent No. 10-1741730

**[DETAILED DESCRIPTION OF THE INVENTION]**

**[TECHNICAL PROBLEM]**

The purpose of the present invention to solve the above problems is to provide a tire wear estimation device and method with improved accuracy by reflecting tire characteristics, driver characteristics, and road surface characteristics during driving from a more multifaceted perspective.

Furthermore, it aims to provide a tire wear estimation device and method that offers improved applicability and cost-effectiveness by achieving high predictive accuracy with relatively less information compared to conventional estimation methods based on vehicle dynamics models.

More specifically, in the section where the ERR increases, the tire wear amount is estimated using the vehicle's mileage-based wear curve, which is an experimental method for predicting tire wear caused by friction with the road surface per driving mileage. In the section where the ERR decreases, the effective rolling radius (ERR) and contact ratio are obtained using the tire's linear speed measured by GPS and the tire's rotational speed measured by the wheel speed sensor and Tire mounted sensor (TMS), then converted into reference values. Subsequently, the tire wear amount is estimated using the linear relationship between the ERR and the tire wear amount (Effective Rolling Radius, ERR) and contact ratio measured from the GPS, wheel speed sensor, and TMS, convert them to reference values, and then estimate tire wear using a linear relationship equation between ERR and tire wear.

The objectives to implement in the present invention are not limited to the technical problems described above and other objectives that are not stated herein will be clearly understood by those skilled in the art from the following specifications.

**[SOLUTION TO PROBLEM]**

The tire wear estimation device of the present invention, for achieving the above-mentioned purpose, comprises: a tire condition sensing unit positioned inside the tire mounted on a vehicle or the vehicle itself, which measures the tire condition data including the tire's acceleration, tire air pressure, linear velocity at the tire's center, and driving mileage; a tire condition data receiving unit that receives the condition data from the tire condition sensing unit; a database unit storing the received tire condition data, the tire's average wear rate, and a wear estimation model; a processing unit that calculates the effective rolling radius based on the angular velocity derived from the tire's acceleration and the tire's linear velocity among the condition data, and calculates the tire contact length based on the tire's acceleration; and A tire wear estimation unit that estimates the first tire wear amount by inputting the effective rolling radius and tire contact length from the processing unit and the tire air pressure from the tire condition data receiving unit into the pre-stored wear estimation model; characterized in that the tire wear estimator further estimates a second tire wear amount based on the estimated first tire wear amount, the driving mileage, and a pre-stored average wear rate, and outputs the final wear state of the tire during the vehicle's driving.

In an embodiment of the present invention, the wear estimation model may be generated by inputting learning data, including a plurality of tire effective rotation radii, tire air pressures, and tire contact lengths, which are either pre-stored or received from an external source, into a machine learning model.

In an embodiment of the present invention, it may further include a display unit that displays the second tire wear amount of the tire to the driver.

In an embodiment of the present invention, it may further include a vehicle electronic control unit (ECU) that performs control of the vehicle based on the final wear state of the tire.

In an embodiment of the present invention, the tire condition sensing unit may include a TMS (Tire Mounted Sensor) acceleration sensor mounted inside the tire and a GPS sensor mounted on the vehicle.

In an embodiment of the present invention, the tire wear estimation unit may define multiple wear levels based on the range of the first tire's wear amount, thereby varying the estimation method for the second tire's wear amount accordingly.

Another embodiment of the tire wear estimation method of the present invention comprises: a measurement step of measuring the tire's state data, including the tire's acceleration, tire air pressure, linear velocity at the tire's center, and driving mileage, by a tire condition sensing unit located inside the vehicle or inside a tire mounted on the vehicle; a receiving step of receiving the state data from the tire state sensor unit; a calculation step of calculating an effective rolling radius based on the angular velocity derived from the tire acceleration and the tire linear velocity among the condition data, and calculating the tire contact length based on the tire acceleration; a first tire wear estimation step of estimating the first tire wear amount by inputting the effective rolling radius, tire contact length, and tire air pressure into a pre-stored wear estimation model; and a second tire wear estimation step that estimates the second tire wear amount based on the estimated first tire wear amount, the tire mileage, and a pre-stored average wear rate, and outputs the final wear state of the tire during the vehicle's operation.

In an embodiment of the present invention, said acceleration is the x-direction acceleration and z-direction acceleration measured by the tire condition sensing unit during one rotation of the tire while supporting the load of the tire during vehicle operation in a deformed state, The contact length can be derived by calculating the distance from the first positive peak to the second positive peak of the x-direction acceleration during one revolution of the tire, or the distance from the first positive peak to the second positive peak of the derivative of the z-direction acceleration.

The effective radius of rotation ($R_e$) can be derived based on the linear velocity (V) at the tire center and the angular velocity ($\Omega$) derived from the x-direction acceleration and z-direction acceleration, according to <Equation 1>.

<div align="center"><Equation 1></div>

$$R_e = \frac{V}{\Omega}$$

In an embodiment of the present invention, the tire wear estimation step may include defining a plurality of wear levels based on the range of the first tire wear amount, and accordingly varying the estimation method for the second tire wear amount to perform estimation.

Another embodiment of the present invention, a tire wear estimation method utilizing effective rolling radius, comprises: a first step in the computation unit of performing operations to filter data collected by the data collection unit and track ERR (Effective Rolling Radius); a second step in the computation unit of correcting ERR based on Contact Ratio; a third step in the computation unit of confirming whether the ERR increases; a fourth step: Estimating the wear rate during the ERR increase using a database within the processing unit; a fifth step: Outputting the wear when the ERR increases within the processing unit; a sixth step: Correcting the ERR based on the Contact Ratio when the ERR decreases within the processing unit; In the processing unit, a seventh step of estimating the tire wear by utilizing the linear relationship between the ERR and the tire wear amount during the decrease of the ERR; and In the processing unit, an eighth step of outputting the wear when the ERR decreases; may be included.

In an embodiment of the present invention, in the first step, the data collection unit may comprise a Tire Mounted Sensor (TMS) and one or more sensors selected from a standalone GPS and a sensor capable of measuring wheel speed.

In an embodiment of the present invention, in the fourth step, the mileage-based wear curve of the vehicle can predict the amount of wear on the tire caused by friction with the road surface for each driving mileage of the tire.

In an embodiment of the present invention, in the third step, if the current value of the ERR is greater than the initial value of the ERR, it can be determined that the ERR is increasing; if the current value of the ERR is less than the initial value of the ERR, it can be determined that the ERR is decreasing.

In an embodiment of the present invention, in the second step or sixth step, the Contact Ratio can be obtained from the TMS, and the Contact Ratio can be derived using the following equation.

$$Contact\ Ratio = f(Inflation\ Pressure,\ Load)$$

(Here, *Contact Ratio* is the contact rate, *Inflation Pressure* is the tire's air pressure, and *Load* is the value for the tire's load.)

In an embodiment of the present invention, in the sixth step, the current ERR can be converted into a Reference ERR, and the current Contact Ratio can be converted into a Reference Contact Ratio.

In an embodiment of the present invention, in the sixth step, the Reference ERR and the Reference Contact Ratio can be derived using the following equations.

$$ERR_{ref},\ CR_{ref} = f(ERR,\ CR)$$

(Here, $ERR_{ref}$ is the value of the Reference ERR, $CR_{ref}$ is the value of the Reference Contact Ratio, *ERR* is the value of the current ERR, and *CR* is the value of the current Contact Ratio.)

In an embodiment of the present invention, in the seventh step, the linear relationship equation between the ERR and the wear amount of the tire can be derived from a database of ERR linear relationship equations corresponding to wear patterns occurring in buffed tires, which are tires artificially worn.

In an embodiment of the present invention, in seventh step, the ERR can be fitted, and the ERR value of the fitted line can be substituted into the linear relationship equation to estimate the current wear amount of the tire.

In another embodiment of the present invention, a tire wear condition display device may be disclosed, comprising: a calculation unit that performs a tire wear estimation method utilizing an effective rotational radius to calculate the tire wear amount; and a display that receives information about the tire wear amount from the calculation unit and displays the wear condition of the tire.

In another embodiment of the present invention, a tire wear condition management system may be disclosed, comprising: a tire wear condition display device; and a warning device that receives information about the tire's wear amount from the computational unit and displays a warning signal when the tire's wear amount exceeds a preset threshold value.

Another embodiment of the present invention, a tire wear estimation method utilizing effective rolling radius and contact ratio, comprises: in the tire wear estimation method, at the processing unit performing calculations, a step of filtering data collected by the data collection unit and tracking the ERR (Effective Rolling Radius); at the processing unit, a step of correcting the ERR based on the Contact Ratio; wherein the processing unit includes: a step of confirming whether the ERR is decreasing; wherein the processing unit includes: a step of estimating the tire wear by utilizing the linear relationship between the ERR and the tire wear amount in the portion where the ERR is decreasing.

In an embodiment of the present invention, after the step of confirming whether the ERR decreases, the processing unit may further include: a step of correcting the ERR based on the Contact Ratio when the ERR decreases.

In an embodiment of the present invention, after the step of estimating the wear of the tire by utilizing the linear relationship between the ERR and the wear amount of the tire in the portion where the ERR decreases, the processing unit may further include a step of outputting the wear when the ERR decreases.

In an embodiment of the present invention, in the step of filtering data collected by the data collection unit and tracking the ERR (Effective Rolling Radius), the data collection unit may comprise a TMS (Tire Mounted Sensor) and one or more sensors selected from a standalone GPS and a sensor capable of measuring wheel speed.

In an embodiment of the present invention, in the step of confirming whether the ERR is decreasing, if the current value of the ERR is greater than the initial value of the ERR, it can be determined that the ERR is increasing, and if the current value of the ERR is less than the initial value of the ERR, it can be determined that the ERR is decreasing.

In an embodiment of the present invention, the Contact Ratio can be obtained from the TMS and can be derived using the following equation.

$$\textbf{\textit{Contact Ratio}} = \textbf{\textit{f(Inflation Pressure, Load)}}$$

(Here, *Contact Ratio* is the contact rate, *Inflation Pressure* is the tire's air pressure, and *Load* is the value for the tire's load.)

In an embodiment of the present invention, when the ERR decreases, the step of correcting the ERR based on the Contact Ratio may be characterized by converting the current ERR into a Reference ERR and converting the current Contact Ratio into a Reference Contact Ratio.

In an embodiment of the present invention, the Reference ERR and the Reference Contact Ratio can be derived using the following equations.

$$ERR_{ref}, \; CR_{ref} = f(ERR, \; CR)$$

(Here, '$ERR_{ref}$' is the value of the Reference ERR, '$CR_{ref}$' is the value of the Reference Contact Ratio, '*ERR*' is the value of the current ERR, and '*CR*' is the value of the current Contact Ratio.)

In an embodiment of the present invention, the linear relationship between the ERR and the wear amount of the tire can be derived from a database of ERR linear relationship equations corresponding to wear patterns occurring in buffed tires, which are tires artificially worn down.

In an embodiment of the present invention, the current wear amount of the tire can be estimated by fitting the ERR and substituting the ERR value of the fitted line into the linear relationship equation.

In another embodiment of the present invention, a tire wear condition display device may be disclosed, comprising: a calculation unit that performs a tire wear estimation method utilizing the effective rotational radius and the grip ratio to calculate the tire wear amount; and a display that receives information about the tire wear amount from the calculation unit and displays the wear condition of the tire.

In another embodiment of the present invention, a tire wear condition management system may be disclosed, comprising: a tire wear condition display device; and a warning device that receives information about the tire wear amount from the calculation unit and displays a warning signal when the tire wear amount exceeds a preset reference value.

**[ADVANTAGEOUS EFFECTS OF INVENTION]**

The effect of the present invention according to the above configuration is that a tire wear estimation device and method are provided, which improves the accuracy of tire wear estimation by reflecting the characteristics of the tire, driver characteristics, and road surface characteristics during driving, enabling high-accuracy real-time prediction of tire wear condition. Consequently, it can alert the driver about tire wear condition, providing estimated braking distance and tire management convenience. It also enables optimal control by the vehicle control system considering tire wear condition and facilitates automated tire maintenance for autonomous vehicles.

Furthermore, it can achieve high predictive capability with relatively limited sensing information, enhancing the technology's applicability and cost-effectiveness.

Furthermore, in sections where ERR increases, the tire wear amount is estimated using the vehicle's mileage-based wear curve-an experimental method predicting tire wear caused by friction with the road surface per driving mileage. In sections where ERR decreases, the tire's linear velocity measured by GPS and the rotational speed measured by the wheel speed sensor and TMS are used to obtain ERR and Contact Ratio. These are then converted into reference values. The tire wear amount can be estimated using the linear relationship between ERR and tire wear. The accuracy of estimating tire wear increases because different methods are used to estimate wear in sections where ERR increases and decreases, respectively. This accounts for the initial uneven increase in ERR when wear begins and variations due to tire pressure and load.

The effects of the present invention are not limited to the above effects, and should be understood to include all effects inferable from the detailed description of the invention or the configuration of the invention described in the claims.

**[BRIEF DESCRIPTION OF THE DRAWINGS]**

Figure 1 shows a schematic diagram of a tire wear estimation device according to an embodiment of the present invention.

Figure 2 shows the attachment state of the tire mounted sensor (TMS) (112) attached to the tire according to an embodiment of the present invention.

Figure 3 shows a flowchart of a tire wear estimation method according to an embodiment of the present invention.

Figure 4 shows (a) the shape and direction of a tire contacting the ground during vehicle travel, and (b) a graph of the acceleration waveform measured by the tire attachment sensor during one revolution of the tire while the vehicle is traveling, according to an embodiment of the present invention.

Figure 5 shows elements of a tire for deriving the effective rotation radius (ERR) ($R_e$) from tire condition data according to an embodiment of the present invention.

Figure 6 is a graph showing the trend of the effective rotation radius according to the driving mileage of the tire according to an embodiment of the present invention.

Figure 7 shows a tire wear estimation model generated using SVM according to an embodiment of the present invention.

Figure 8 is a graph showing the tire wear rate according to the driving mileage according to an embodiment of the present invention.

Figure 9 is a schematic diagram of a tire wear estimation method operating in the tire wear estimation unit (150) according to an embodiment of the present invention.

Figure 10 is an image showing the reduction in tire tread thickness as tire wear progresses.

Figure 11 is a conceptual diagram showing an algorithm for a tire wear estimation method using an effective rotation radius according to an embodiment of the present invention.

Figure 12 is a flowchart showing the tire wear estimation method using the effective rotation radius according to an embodiment of the present invention.

Figure 13 is a graph showing the results of an actual vehicle test performed by executing the tire wear estimation method using the effective rotation radius according to an embodiment of the present invention.

Figure 14 is a graph showing the results of executing a real-vehicle test by tracking the ERR starting from the ERR value where the ERR began to decrease, after performing the tire wear estimation method using the effective rotation radius according to an embodiment of the present invention.

Figure 15 is a graph showing the results of estimating tire wear over a distance of 45,000 km by performing a real-vehicle test using the tire wear estimation method based on the effective rotation radius according to an embodiment of the present invention.

**[BEST MODE]**

The most preferred embodiment of the present invention comprises: a tire condition sensing unit positioned inside the vehicle or a tire mounted on the vehicle, measuring the tire condition data including the tire's acceleration, tire air pressure, linear velocity at the tire's center, and driving mileage; a tire condition data receiving unit receiving the condition data from the tire condition sensing unit; a database unit storing the received tire condition data, the tire's average wear rate, and a wear estimation model; a processing unit calculating an effective rolling radius based on the angular velocity derived from the tire's acceleration and the tire's linear velocity among the condition data, and calculating the tire contact length based on the tire's acceleration; and A tire wear estimation unit that estimates the first tire wear amount by inputting the effective rolling radius and tire contact length from the processing unit and the tire air pressure from the tire condition data receiving unit into the pre-stored wear estimation model; The tire wear estimator further estimates the second tire wear amount based on the estimated first tire wear amount, the driving mileage, and the pre-stored average wear rate, and outputs the final wear state of the tires during the vehicle's driving.

**[DESCRIPTION OF EMBODIMENTS]**

Hereinafter, the present invention is described with reference to the accompanying drawings. However, the present invention may be modified in various different ways and is not limited to the embodiments described herein. Further, in the accompanying drawings, components irrelevant to the description will be omitted in order to clearly describe the present invention, and similar reference numerals will be used to describe similar components throughout the specification.

Throughout the specification, when an element is referred to as being "connected with (coupled to, combined with, in contact with)" another element, it may be "directly connected" to the other element and may also be "indirectly connected" to the other element with another element intervening therebetween. Further, unless explicitly described otherwise, "comprising" any components will be understood to imply the inclusion of other components rather than the exclusion of any other components.

Terms used in the present invention are used only in order to describe specific exemplary examples rather than limiting the present invention. Singular forms are intended to include plural forms unless the context clearly indicates otherwise. It will be further understood that the terms "comprise" or "have" used in this specification specify the presence of stated features, numerals, steps, operations, components, parts, or a combination thereof, but do not preclude the presence or addition of one or more other features, numerals, steps, operations, components, parts, or a combination thereof.

Terms '~er', '~unit', '~module', etc. used herein mean the units for processing at least one function or operation and may be implemented by hardware, software, or a combination of hardware and software.

Further, in the specification, when a step is positioned "before" or "after" another step, this includes the same right as not only when the step and another step are in a direct time-serial relationship, but when they are in an indirect time-serial relationship in which the orders of the two steps may be time-serially changed such as mixing of the steps after the steps.

Hereinafter, examples of the present invention are described in detail with reference to the accompanying drawings.

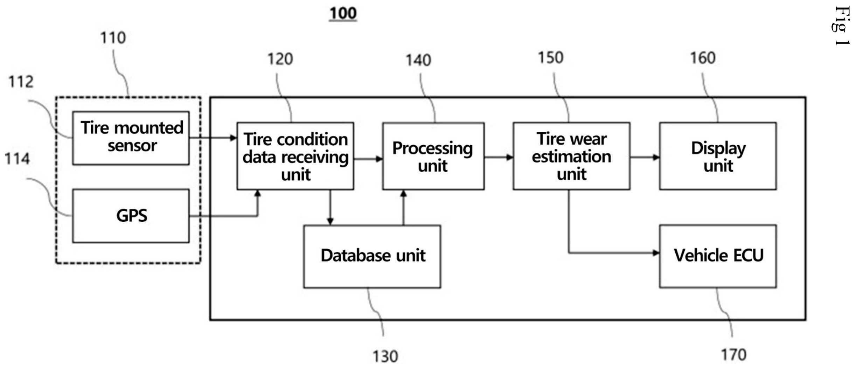

Figure 1 is a schematic diagram of a tire wear estimation device (100) according to an embodiment of the present invention.

Referring to Figure 1, the tire wear estimation device (100) according to an embodiment of the present invention may include a tire condition sensing unit (110), a tire condition data receiving unit (120), a database unit (130), a processing unit (140), and a tire wear estimation unit (150). The tire wear estimation device (100) may further include a display unit (160) and a vehicle electronic control unit (ECU) (170).

The tire condition sensing unit (110) is located inside the tire mounted on the vehicle or inside the vehicle, and can measure condition data of the tire, including the tire's acceleration, tire air pressure, linear velocity at the tire's center, and driving mileage.

The tire condition sensing unit (110) may include a tire mounted sensor (112) mounted inside the tire and a GPS sensor (114) mounted on the vehicle. The tire mounted sensor (TMS) (112) can measure the dynamic condition of the tire during vehicle travel, including air pressure, acceleration, and linear velocity.

The tire mounted sensor may also measure acceleration in each of the three axes (radial, lateral, longitudinal).

The data from the measured accelerations contains information related to tire vibration and deformation, and its characteristics vary depending on tire air pressure, load, speed, and tire wear condition.

The tire mounted sensor (112) can wirelessly transmit the measured acceleration and tire pressure, which is received by the tire condition data receiving unit (120) located inside the vehicle.

The GPS sensor (114) can measure tire condition, including the location, distance traveled, speed, etc., of the vehicle to which the tire is attached. The GPS sensor (114) can measure the location coordinates, distance traveled, driving speed, etc., of the vehicle equipped with the tire.

The tire condition data receiving unit (120) can receive the condition data from the tire condition sensing unit and provide the condition data to the processing unit (140) and/or the tire wear estimation unit (150).

The database unit (130) can store the received tire condition data, the average tire wear rate, and the wear estimation model.

The processing unit (140) can calculate an effective rolling radius based on the angular velocity derived from the tire's acceleration and the tire's linear velocity from the tire's condition data, and calculate the tire contact length based on the tire's acceleration.

The acceleration may be the x-direction acceleration and z-direction acceleration measured by the tire condition sensing unit during one revolution of the tire while it is deformed under load during vehicle operation.

The processing unit (140) can calculate the contact length by computing the distance from the first positive peak to the second positive peak of the x-direction acceleration, or the distance from the first positive peak to the second positive peak of the derivative of the z-direction acceleration.

The effective rotational radius ($R_e$) can be calculated based on the linear velocity (V) at the tire center and the angular velocity (Ω) derived from the x-direction acceleration and z-direction acceleration, according to the following <Equation 1>.

<Equation 1>

$$R_e = \frac{V}{\Omega}$$

The tire wear estimation unit (150) inputs the effective rotation radius and tire contact length from the processing unit, along with the tire air pressure from the tire condition data receiving unit, into the pre-stored wear estimation model to estimate the first tire wear amount. Based on the estimated first tire wear amount, the estimated second tire wear amount based on the estimated first tire wear amount, the driving mileage, and the pre-stored average wear rate, and output it as the final wear state of the tire during the vehicle's driving.

The wear estimation model can be generated by inputting training data into a machine learning model. This training data includes multiple tire effective rotation radii, tire air pressures, and tire contact lengths as input data, which are either pre-stored in the database unit or received externally from, with the output data being the tire wear amount. The machine learning model may be an SVM (Support Vector Machine), but is not limited thereto.

The tire wear estimator (150) can estimate tire wear amount, wear state, and wear rate based on the effective rotation radius and contact length received from the processing unit (140) and the tire air pressure from the sensing data receiving unit.

According to one embodiment of the present invention, the tire wear estimator defines multiple wear levels based on the range of the first tire wear amount, thereby varying the estimation method for the second tire wear amount accordingly. According to one embodiment of the present invention, the plurality of wear levels includes three stages: an initial wear stage where the first estimated tire wear amount is greater than 0 mm and less than or equal to 2 mm, a middle wear stage where it is greater than 2 mm and less than or equal to 4 mm, and a final wear stage where it is greater than 4 mm. In the initial wear stage, the first tire wear amount is output as the final wear state of the tire.

In the case of the mid-wear stage, the final wear state of the tire is output as the value obtained by dividing the sum of the product of the average wear rate and the mileage and the first tire wear amount by 2. and in the case of the late stage of wear, the value obtained by dividing the sum of the product of the first tire wear amount and the mileage and the first tire wear amount by 2 may also be output as the final wear state of the tire. The average wear rate may be a value reflecting tire characteristics, driver characteristics, and road surface characteristics.

The display unit (160) can display the estimated second tire wear amount of the tire to the driver as the final wear state of the tire. The display unit (160) can further display to the driver at least one of the wear amount, wear state, and wear rate of the first tire and provide a warning regarding the vehicle's braking distance.

The vehicle electronic control unit (ECU) (160) may perform control of the vehicle based on the final wear state of the tire. The vehicle electronic control unit (ECU) may perform control of the vehicle, such as braking, based on at least one of the estimated tire wear amount, wear state, and wear rate estimated by the tire wear estimation unit (150).

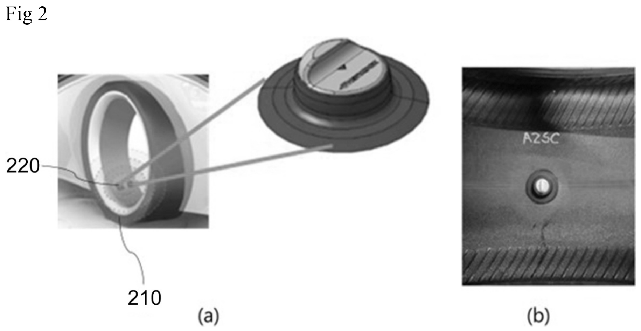

Figure 2 shows the attachment state of a tire mounted sensor (112) attached to a tire according to an embodiment of the present invention.

In Figure 2, (a) shows the state where the tire mounted sensor (220) is attached to the inner surface of the tire (210) according to one embodiment of the present invention, and (b) shows the state where the tire mounted sensing unit (220) is fixedly attached to a groove inside the tire according to one embodiment of the present invention.

However, the position within the tire where the tire mounted sensor (220) is attached is not limited to this. The tire rotates while bearing load, and the portion contacting the road surface repeatedly deforms from spherical to flat. Furthermore, the vibration characteristics of the tire during driving change depending on the roughness and condition of the road surface.

Because the tire mounted sensor (TMS) is attached directly to the inner surface of the tire, it has the potential to sense these deformation and vibration characteristics of the tire. The tire mounted sensor can typically be attached to the inner surface of the tire, in the center of the tread area. In one embodiment of the present invention, mounting the sensor at the center of the tread can also minimize the influence of wheel slip angle or camber angle on the acceleration measurement.

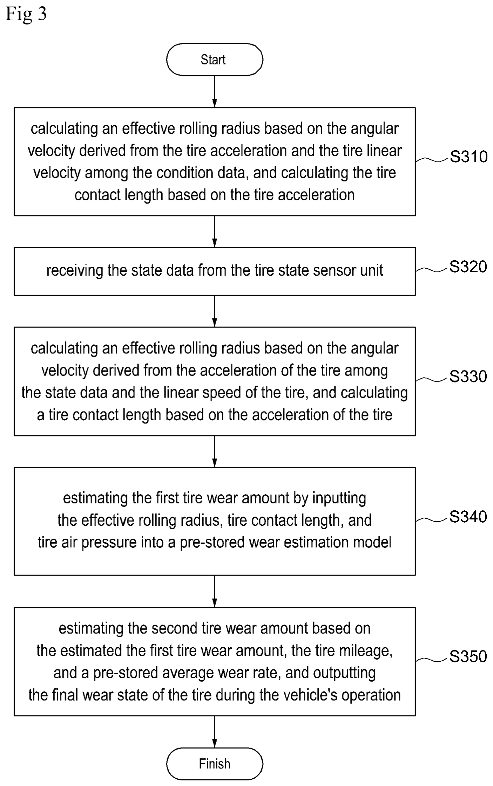

Figure 3 shows a flowchart of a tire wear estimation method according to an embodiment of the present invention. The tire wear estimation method according to an embodiment of the present invention includes: a measurement step (S310) of measuring tire condition data, including the tire's acceleration, tire air pressure, linear velocity at the tire's center, and driving mileage, by a tire condition sensing unit located inside the tire mounted on a vehicle; a receiving step (S320) of receiving the condition data from the tire condition sensor unit; a calculating step (S330) of calculating an effective rolling radius based on the angular velocity derived from the tire acceleration and the tire linear velocity among the condition data, and calculating the tire contact length based on the tire acceleration; A first tire wear estimation step (S340) of estimating the first tire wear amount by inputting the effective rolling radius, tire contact length, and tire air pressure into a pre-stored wear estimation model; and a second tire wear estimation step (S350) that estimates the second tire wear amount based on the estimated first tire wear amount, the tire mileage, and a pre-stored average wear rate, and outputs the final wear state of the tire during the vehicle's operation.

The acceleration is the x-direction acceleration and z-direction acceleration measured by the tire condition sensing unit during one rotation of the tire while it is deformed to support the load of the vehicle during driving; The contact length can be derived by calculating the distance from the first positive peak to the second positive peak of the x-direction acceleration during one revolution ( ) of the tire, or the distance from the first positive peak to the second positive peak of the differentiated value of the z-direction acceleration.

The effective rotational radius ($R_e$) can be derived based on the linear velocity (V) at the tire center and the angular velocity ($\Omega$) derived from the x-direction acceleration and z-direction acceleration, according to the following <Equation 1>.

<Equation 1>

$$R_e = \frac{V}{\Omega}$$

The tire wear estimation unit can define multiple wear levels based on the range of the first tire wear amount and estimate accordingly by changing the estimation method for the second tire wear amount.

The tire wear estimation step may include defining multiple wear levels based on the range of the first tire wear amount and estimating accordingly by changing the estimation method for the second tire wear amount. The plural wear levels include three stages: early wear where the estimated first tire wear amount is greater than 0 mm and less than or equal to 2 mm, mid-wear where it is greater than 2 mm and less than or equal to 4 mm, and late wear where it is greater than 4 mm. In the second tire wear estimation step, if it is early wear, outputs the first tire wear amount as the final wear state of the tire. For the intermediate wear stage, outputs the value obtained by dividing the sum of the product of the average wear rate and the mileage and the first tire wear amount by 2 as the final wear state of the tire. and in the case of the late stage of wear, outputting the sum of the product of the first tire wear amount and the driving mileage and the first tire wear amount, divided by 2, as the final wear state of the tire.

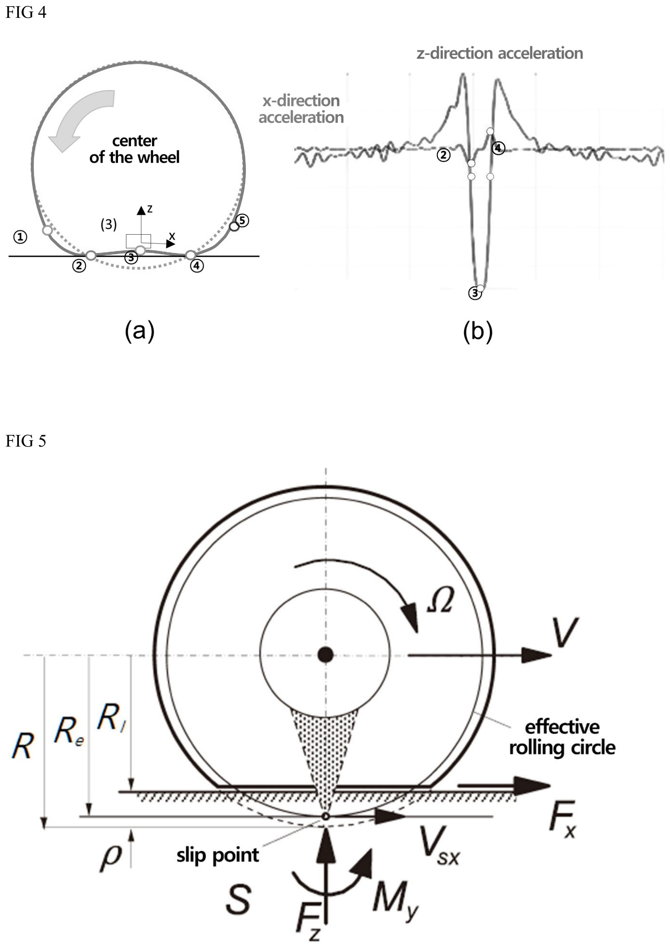

Figure 4 shows an embodiment of the present invention, (a) the shape and direction of a tire contacting the ground during vehicle travel, and (b) a graph of the acceleration waveform measured by a tire mounted sensor during one revolution of the tire while the vehicle is traveling.

Referring to Figure 4, the red graph shows the x-direction acceleration and the blue graph shows the z-direction acceleration. The acceleration waveform exhibits maximum or minimum values near the contact area ②-④ due to discontinuities in the tire shape. For the z-direction acceleration, it converges to nearly zero within the contact area and has a value corresponding to the tire's centrifugal acceleration outside the contact area.

The maximum acceleration change occurs at point ② where the acceleration sensor enters contact and at point ④ where it leaves contact.

The x-direction acceleration exhibits peak values at the start and end points of contact due to the sudden deformation of the tread section. Therefore, the contact area between the tire and the road surface can be distinguished from the acceleration waveform. Using the x-direction acceleration, it can be distinguished by the maximum and minimum peaks, while for the z-direction, it can be distinguished by the maximum and minimum peak points obtained by differentiating the acceleration waveform.

Therefore, the contact length corresponding to the length of the ②-④ section can be measured using the measurement signal transmitted from the tire mounted sensor (TMS) (112). The position of point ③ can be distinguished as the midpoint of the ②-④ section.

Using the time interval during tire rotation when passing point ③, the wheel speed can be measured using the measurement signal transmitted from the tire mounted sensor. Therefore, using the tire mounted sensor (112) together with a sensor capable of measuring the linear speed at the tire center enables real-time estimation of the effective rotation radius.

Figure 5 shows tire elements for deriving the effective rotation radius (ERR) ($R_e$) from tire condition data according to an embodiment of the present invention. Referring to Figure 5, the effective rotation radius ($R_e$) is the value obtained by dividing the linear velocity (V) at the tire center by the angular velocity ($\Omega$), as shown in the following <Equation 1>.

$$\text{<Equation 1>}$$

$$R_e = \frac{V}{\Omega}$$

The effective rolling radius ($R_e$) exhibits a distinct correlation with tire wear, tire pressure, and axle load, as shown in Figure 5, while being insensitive to speed.

$$\text{<Equation 2>}$$

$$R = R_e + d_0 \cdot \left( D \cdot \arctan\left( B \cdot \frac{d}{d_0} \right) + E \cdot \frac{d}{d_0} \right)$$

Here, R is the tire unloaded radius, Rl is the tire loaded radius, $R_e$, d is tire radial deflection, $d_o$ is tire radial deflection for nominal tire load, B and E are factors determined by tire stiffness, and D is a factor related to tire weight, where a larger value indicates a newer tire.

The tire radius can be expressed as a function of the effective rolling radius ($R_e$), tire stiffness, and tire deflection. Tire stiffness is a function of tire pressure, and tire deflection is a function of both tire pressure and load.

Therefore, tire wear can be expressed as a function of the effective rolling radius ($R_e$), tire pressure, and load. And since load is a function of tire pressure and contact length, tire wear can be expressed as a function of the effective rolling radius ($R_e$), tire pressure, and contact length.

<Equation 3>

$$R(tread, pressure) = R_e + f_1(tread, tire\ stiffness, tire\ deflection)$$

$$= R_e + f_2(wear, pressure, load)$$

<Equation 4>

$$tread\ wear = f_3\ (R_e, pressure, load)$$

<Equation 5>

$$tread\ wear = f_4\ (R_e, pressure, contact\ length)$$

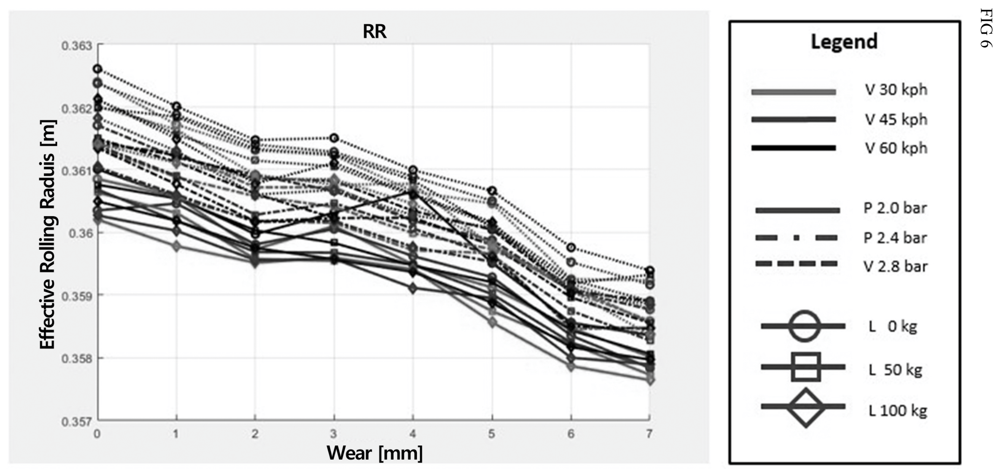

Figure 6 is a graph showing the trend of the effective rolling radius according to the driving mileage of a tire according to an embodiment of the present invention.

Referring to Figure 6, the effective rotational radius exhibits a distinct trend with tire wear, tire pressure, and load as shown in the graph, while being insensitive to speed. The tire radius can be expressed as a function of the effective rotational radius, tire stiffness, and tire deformation.

Tire stiffness is a function of air pressure, and tire deformation is a function of tire air pressure and load. Therefore, tire wear can be expressed as a function of the effective rolling radius, tire air pressure, and load. Furthermore, since load is a function of tire air pressure and contact length, tire wear can be expressed as a function of the effective rolling radius, tire air pressure, and contact length.

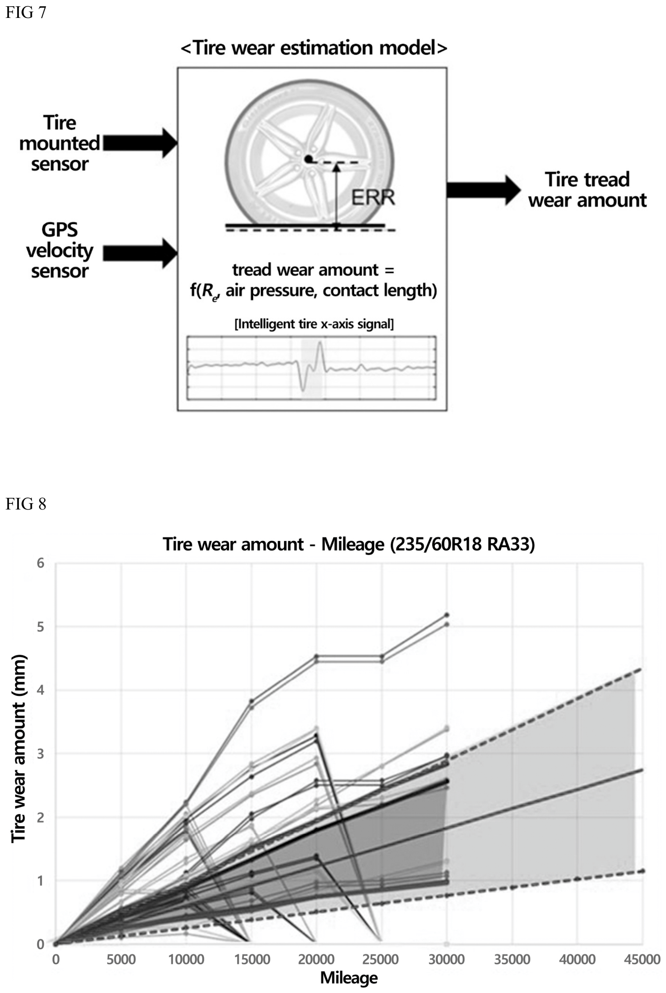

Figure 7 shows a tire wear estimation model generated using SVM according to an embodiment of the present invention.

The input values for the generated wear estimation model are the effective rolling radius ($R_e$), tire pressure, and contact length, while the output value is the tire (tread) wear amount.

The tire pressure uses data measured by the tire mounted sensor (112), while the contact length and effective radius of rotation can be calculated and used through signal processing of the measurement signals transmitted from the tire mounted sensor. Additionally, the tire speed can be measured and used via the GPS sensor (114).

Figure 8 is a graph showing the tire wear rate versus driving mileage according to an embodiment of the present invention.

Referring to Figure 8, the graph shows the wear rate of tires with the same size and pattern. The x-axis represents driving mileage, the y-axis represents wear amount, and the slope of the graph indicates the tire wear rate. The tire wear rate can be calculated by dividing the tire wear amount by the driving mileage (e.g., mileage).

However, since the wear rate cannot be calculated this way for new tires, a tire wear rate database (DB) can be utilized.

As shown in Figure 7, the normal wear rate for a specific tire product group can be calculated from the database, excluding abnormal usage conditions. This value can be averaged and used as the wear rate for new tires. Subsequently, as the tire wears, the actual wear rate value reflecting the usage environment can be updated using the recorded wear amount and mileage.

<Equation 6>

$$Wear\ Rate = (Wear\ Amount) / (Distance\ Traveled)$$

The advantage of this method lies in the wear estimation model's ability to adapt itself to various driving environments.

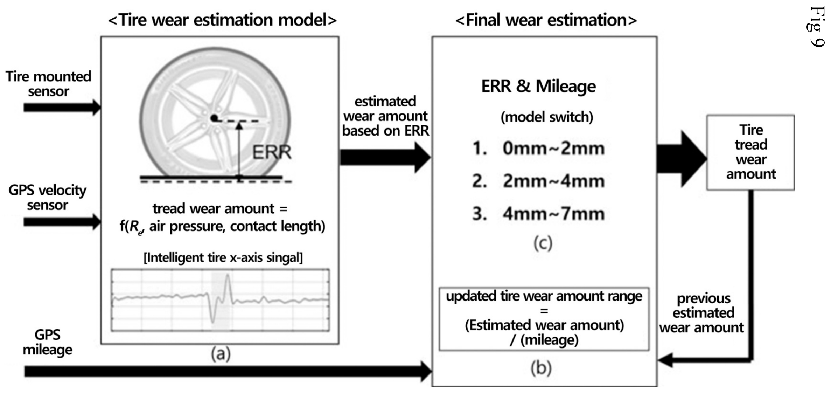

Figure 9 is a schematic diagram of a tire wear estimation method operating in the tire wear estimator (150) according to an embodiment of the present invention.

Referring to Figure 9, (a) and (b) respectively derive wear estimation results based on effective rotation radius (ERR) ($R_e$) and incorporating the wear rate. (c) calculates the final wear estimation result based on the results from (a) and (b).

During the early wear stage (0-2mm), the result from (b) is used as the final estimated wear amount. During the mid-wear stage (2-4mm), the average of (a) and (b) can be used as the final estimated wear amount.

In the late wear stage (4-7mm), the average of the results from (a) and (b) is used as the final estimated value. However, unlike the mid-wear stage, the wear rate used in the calculation of (b) in the late wear stage can be the actual wear rate reflecting the usage environment, whereas in the mid-wear stage, the average wear rate obtained from the database is used.

(1) Wear: Exceeding 0mm up to 2mm

$$\text{Estimated wear amount} = \text{Mileage} / \text{Average wear rate,}$$

$$\text{Average wear rate} = 2/(10363+39216) \approx 1/24790 \text{ [mm/km]}$$

(2) Wear: Over 2mm up to 4mm

$$\text{Estimated wear amount} = (\text{Mileage} \times \text{Average wear rate} + \text{ERR-based estimated wear amount}) \times (1/2)$$

(3) Wear: Over 4mm up to 7mm

$$\text{Estimated wear amount} = (\text{Mileage} \times \text{Updated wear rate} + \text{ERR-based estimated wear amount}) \times (1/2),$$

$$\text{Updated wear rate} = \text{Estimated wear amount} / \text{Mileage}$$

Figure 5 is an image showing the factors in a tire for defining ERR.

Referring to Figure 5, the ERR (Effective Rolling Radius) is explained as follows: First, ERR is referred to as the effective rolling radius, effective rolling diameter, or effective wheel radius. It is a parameter related to the relationship between the constant linear speed and rotational speed of the tire (10). When a vehicle is driving, it indicates the distance from the vehicle side to the actual point of travel when the tire (10) is not traveling using its entire diameter, but rather when a portion of the tire (10) in contact with the ground is buried in the soil. It also signifies the radius calculated using the circumference length for one revolution of the tire (10).

$r_{fr}$ Furthermore, regarding the factors shown in Figure 5: $r_e$ where ERR represents the ratio of the tire's linear velocity to its angular velocity when a vertical load is applied to the tire (10).

Here, the value of $r_e$ or the value of ERR is a value existing between any two of the three factors mentioned above, and is a factor obtainable from sources such as Standalone GPS, wheel speed sensors, and TMS (Tire Mounted Sensor).

The $r_e$ can be calculated using the following Equation 1.

<Equation 1>

$$r_e = \frac{V}{\omega}$$

(Here, $V$ is the tire's linear velocity, and $\omega$ is the tire's angular velocity.)

The ERR is a factor highly correlated with tire (10) wear and can be easily obtained from the tire's linear velocity and rotational speed. Therefore, conventional technologies for estimating tire (10) wear using ERR based on rotational speed data have been reported.

However, as tire (10) wear progresses, ERR exhibits irregularity, initially increasing unevenly and then decreasing later. Additionally, there is the issue that ERR varies even under the same wear condition depending on the tire (10) air pressure and load.

Accordingly, in the tire wear estimation method utilizing ERR of the present invention, the ERR obtained from the tire's (10) linear velocity acquired from GPS and the tire's (10) rotational speed acquired from the wheel speed sensor and TMS (Tire Mounted Sensor) is converted into an ERR that considers the tire's (10) air pressure and load, obtained by utilizing the Contact- -Ratio acquired via the TMS. Here, the correlation between the tire (10) wear and the tracked ERR enables estimation of the tire (10) wear amount, and this aspect will be explained.

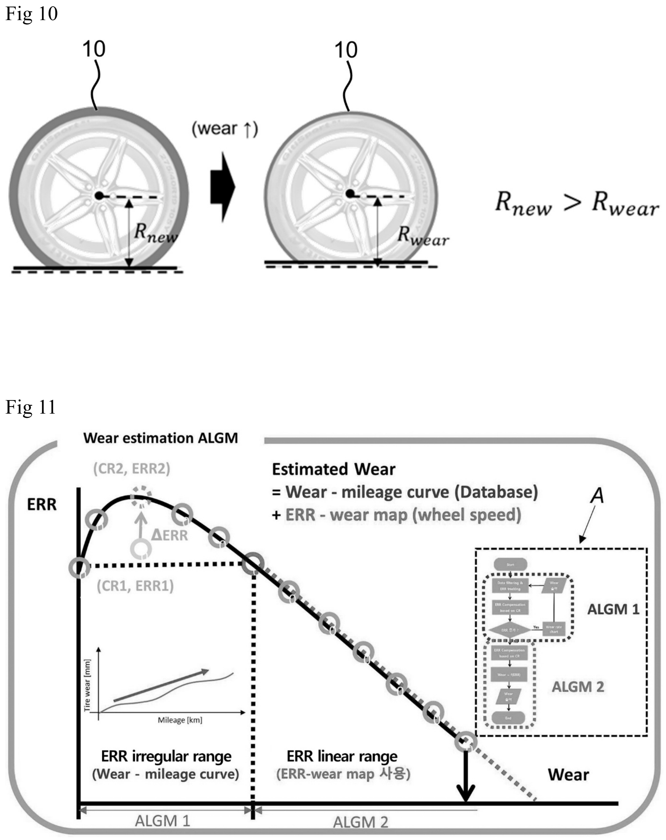

Figure 10 is an image showing the reduction in tire tread thickness as tire wear progresses.

Referring to Figure 10, it can be intuitively confirmed that as the tire (10) wears, the distance from the ground to the center of the tire (10) decreases.

Furthermore, it can be seen that as the tire (10) wears and the tread thickness decreases, the ERR also decreases.

Figure 11 is a conceptual diagram illustrating the algorithm for the tire wear estimation method using the effective radius of rotation according to an embodiment of the present invention.

Referring to Figure 11, the ERR initially increases as the tire (10) wears, then subsequently decreases. The initial increase portion exhibits an uneven increase, making it impossible to obtain a correlation between the ERR and the amount of wear on the tire (10).

Therefore, an alternative algorithm is required for the initial unevenly increasing portion instead of using an algorithm based on the ERR value. Since ERR correlates with the tire's (10) air pressure and load, conversion for the tire's (10) air pressure and load is also necessary.

Here, the tire wear estimation method using the effective rolling radius of the present invention divides the ERR into sections where it increases and sections where it decreases, employing different methods to estimate tire (10) wear in each section.

In the section where the ERR increases, wear is estimated using the existing database, the vehicle's mileage-based wear curve (Wear - mileage curve). In the section where the ERR decreases, wear is estimated using a linear relationship equation between the ERR and the amount of wear on the tire (10).

Here, mileage represents the vehicle's driving mileage, and the wear-mileage curve may be a graph formed using data experimentally measured and obtained by measuring the amount of wear on the tire (10) according to the tire's driving mileage.

Hereinafter, the tire wear estimation method using the effective radius of rotation of the present invention will be described in more detail.

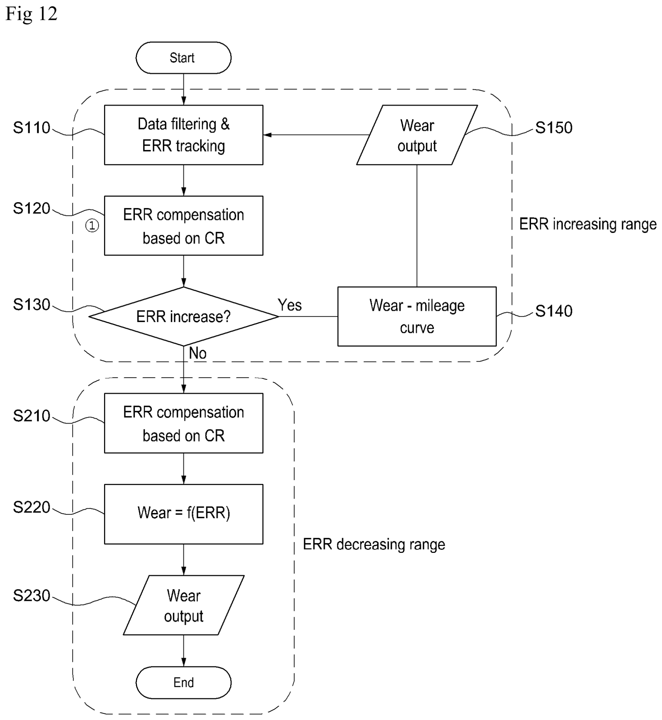

Figure 12 is a flowchart showing a tire wear estimation method using the effective rotation radius according to an embodiment of the present invention.

Figure 12 also shows an enlarged view of portion A in Figure 11.

Referring to Figure 12, first, in step S110, the processing unit performs operations to filter the data collected by the data collection unit and track the ERR (Effective Rolling Radius).

Here, the data collection unit may comprise a Tire Mounted Sensor (TMS) and one or more sensors selected from a standalone GPS and sensors capable of measuring wheel speed.

The sensor capable of measuring wheel speed may comprise various sensors capable of measuring wheel speed, such as a wheel speed sensor or a TMS.

Although the present invention describes the data collection unit as comprising Standalone GPS and one or more sensors selected from sensors capable of measuring wheel speed, along with a Tire Mounted Sensor (TMS), it is not limited thereto. It may also comprise various sensors capable of measuring the linear velocity of the tire (10) or the rotational speed of the tire (10).

Next, in step S120, the processing unit corrects the ERR based on the Contact Ratio.

At this time, the Contact Ratio can be obtained from the TMS, and the Contact Ratio can be derived using the following Equation 7.

<Equation 7>

$$Contact\ Ratio = f(Inflation\ Pressure,\ Load)$$

(Here, *Contact Ratio* is the contact ratio, *Inflation Pressure* is the tire's air pressure, and *Load* is the value for the tire's load.)

Using the Equation 7, a Contact Ratio map was generated for various inflation pressures and loads using MatLab.

Specifically, the map was formed from the fitting polynomial for Contact Ratio based on x: air pressure and y: load, as shown in the following <Equation 7-a>.

## \<Equation 7-a\>

$$f = (ax^2 + bx + c) \times (a'y^2 + b'y + c)$$

In Equation 7, the contact ratio can be defined as the ratio of the contact area between the tire tread and the ground surface to the total tread area of the tire (10).

Furthermore, the function *f(Inflation Pressure, Load)* may be derived from a graph created using data collected by experimentally measuring the contact ratio based on the tire's (10) inflation pressure and the load applied to the tire (10). This is a known technique for deriving a function using measured data; detailed explanation is omitted. The same applies below.

Next, in step S130, the processing unit uses the ERR calibrated in the step S120 to check whether the ERR is increasing.

At this time, if the current value of ERR is greater than the initial value of ERR, it is judged that ERR is increasing. If the current value of ERR is less than the initial value of ERR, it is judged that ERR is decreasing.

Furthermore, to determine whether ERR is increasing or decreasing, ERR is first corrected to the Contact ratio based on the Reference, and then the increase or decrease of ERR is determined.

Here, if the current value of ERR is confirmed to be greater than the initial value of ERR, indicating that ERR is increasing, the process proceeds to step S140.

In step S140, the processing unit estimates the wear rate during the ERR increase using a database.

Here, for the portion where the ERR increases, the wear of the tire (10) is estimated using the vehicle's mileage-based wear curve.

Specifically, the vehicle mileage-based wear curve predicts the amount of wear on the tire (10) caused by friction with the road surface per driving mileage of the tire (10).

More specifically, the tire (10)'s mileage can be substituted into the vehicle's mileage-based wear curve, and the tire (10)'s wear amount can be predicted using the obtained wear amount.

Next, in step S150, the processing unit outputs the wear when ERR increases.

Afterwards, it returns to step S110 and repeats steps S110 to S150, determining whether ERR increases or decreases, and repeats steps S110 to S150 until ERR begins to decrease.

Meanwhile, in the step S130, if the current value of ERR is confirmed to be smaller than the initial value of ERR, indicating that ERR is decreasing, the process proceeds to step S210.

In step S210, the processing unit corrects ERR based on the Contact Ratio when ERR decreases. Here, Equation 7 can be used.

Furthermore, the current ERR is converted to a Reference ERR, and the current Contact Ratio is converted to a Reference Contact Ratio.

At this time, the Reference ERR and Reference Contact Ratio are derived using the following Equation 8.

## \<Equation 8\>

$$ERR_{ref}, \ CR_{ref} = f(ERR, \ CR)$$

(Here, '$ERR_{ref}$' is the value of the Reference ERR, '$CR_{ref}$' is the value of the Reference Contact Ratio, '*ERR*' is the value of the current ERR, and '*CR*' is the value of the current Contact Ratio.)

\<Equation 8\> is an equation derived from empirical testing. Through the \<Equation 8\>, the relationship between ERR and Contact Ratio can be understood, and Reference ERR and Reference Contact Ratio can be derived.

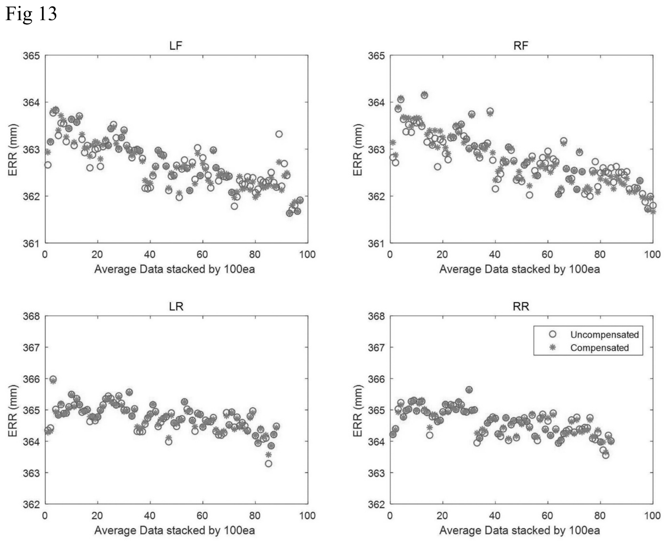

Figure 13 is a graph showing the results of a real-vehicle test performed using the tire wear estimation method based on the effective rotation radius according to an embodiment of the present invention.

Specifically, Figure 13 is a graph showing the ERR data averaged from data acquired from 100 tires (10) during the actual vehicle test. LF (Left Front) denotes the ERR data from the left front wheel, RF (Right Front) denotes the ERR data from the right front wheel, LR (Left Rear) denotes the ERR data from the left rear wheel, and RR (Right Rear) denotes the ERR data from the right rear wheel.

Furthermore, the graph in Figure 13 shows the values of the corrected ERR and the uncorrected ERR.

Furthermore, referring to Figure 13, it shows ERR data collected during road driving converted into Reference ERR, confirming that the dispersion of ERR values is reduced.

Referring again to Figure 12, in step S220, the processing unit estimates the wear of the tire (10) by utilizing the linear relationship between ERR and the wear amount of the tire (10) in the portion where ERR decreases.

<Equation 9>

$$Wear = f(ERR)$$

(Here, *ERR* is the current value of ERR, and *Wear* is the estimated wear amount.)

The Equation 9 was fitted to a polynomial curve using MatLab, resulting in the following Equation 9-a, which represents a first-order polynomial relationship.

<Equation 9-a>

$$f = ax + b$$

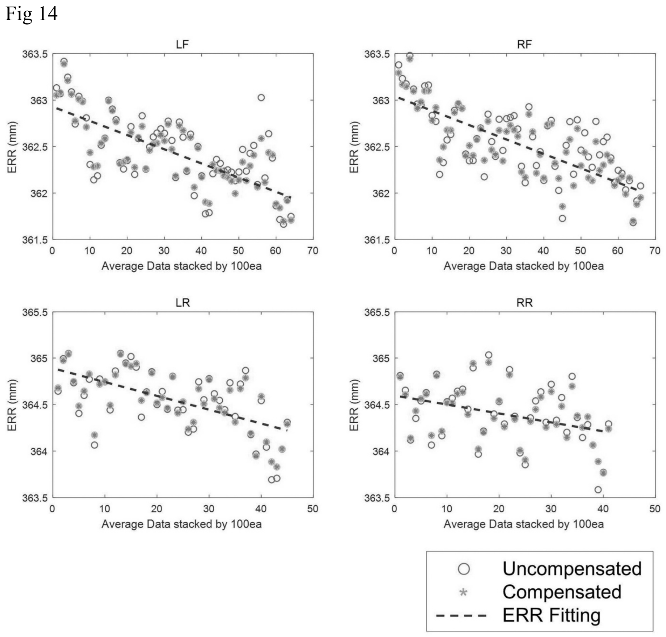

Furthermore, in Equation 9, the function f(ERR) is a function of the linear relationship obtained by converting ERR data collected experimentally during vehicle road driving into Reference ERR, as shown in Figures 13 and 14.

Specifically, once the current value of ERR begins to decrease below its initial value, the tire wear (10) can be estimated using the algorithm for the decreasing portion of ERR, based on the linear relationship between ERR and the tire wear amount (10).

Here, the linear relationship between ERR and the wear amount of the tire (10) is derived from a database of ERR linear relationships corresponding to wear levels occurring in buffed tires (10), which are tires (10) artificially worn down, and can form the f(ERR) function.

The buffed tire (10) refers to an artificially worn tire (10), specifically a tire (10) whose outer surface has been buffed (polished) or cut using a buffing machine or grinding machine to remove the tire tread and outer materials of the tire (10).

Accordingly, since allowing the tire (10) to undergo natural wear each time consumes significant time and cost, a buffed tire is used to establish the linear relationship equation.

Furthermore, in the linear relationship equation between ERR and the wear amount of the tire (10), a tire (10) subjected to natural wear initially shows an increasing trend followed by a decreasing trend, while a buffed tire (10) shows a decreasing trend from the outset.

Moreover, in the linear relationship equation between ERR and the wear amount of the tire (10), the slope of the buffed tire (10) is highly similar to that of the naturally worn tire (10). Consequently, there is no difference in the linear relationship equations between the buffed tire (10) and the naturally worn tire (10), making it possible to substitute the buffed tire (10) for the naturally worn tire (10).

Figure 14 is a graph showing the results of a real-vehicle test performed by tracking the ERR from the ERR value where the ERR began to decrease, after executing the tire wear estimation method using the effective rotation radius according to an embodiment of the present invention.

Specifically, Figure 14 is a graph showing the ERR data averaged from data acquired from 100 tires (10) during the actual vehicle test. LF (Left Front) denotes the ERR data from the left front wheel, RF (Right Front) denotes the ERR data from the right front wheel, LR (Left Rear) denotes the ERR data from the left rear wheel, and RR (Right Rear) denotes the ERR data from the right rear wheel.

Furthermore, the graph in Figure 14 shows the values of the corrected ERR and the uncorrected ERR, and indicates the fitted ERR.

Specifically, referring to Figure 14, the current wear amount of the tire (10) is estimated by fitting the ERR and substituting the ERR value of the fitted line into a linear relationship equation.

More specifically, ERR is tracked starting from the ERR value where it begins to decrease and fitted as shown by the blue dotted line in Figure 6. The ERR value of the fitted dotted line is then substituted into the linear relationship equation between the buffed tire (10)'s ERR and the tire (10)'s wear amount to estimate the current wear amount of the tire (10).

Next, in step S230, the processing unit outputs the wear when the ERR decreases.

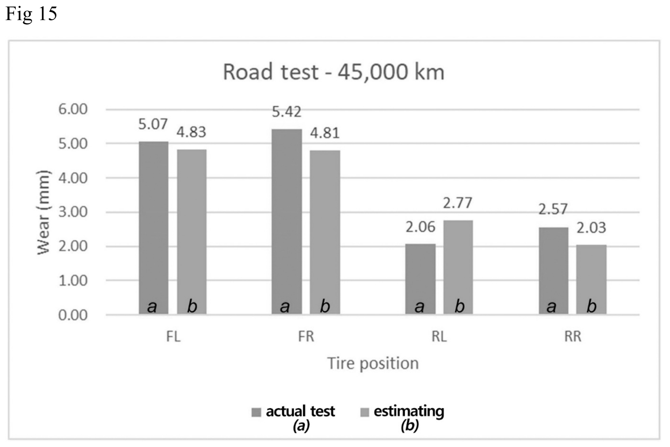

Figure 15 is a graph showing the results of estimating tire wear during a real-vehicle test performed using the tire wear estimation method based on the effective radius of rotation according to an embodiment of the present invention, estimating the tire wear amount while the vehicle traveled 45,000 km.

Specifically, Figure 15 is a graph showing the wear amount occurring according to the tire (10) position on a vehicle during actual vehicle testing. Here, a at FL (Front Left) is the measured wear amount on the left front wheel, b at FL (Front Left) is the estimated wear amount on the left front wheel, a at FR (Front Right) is the measured wear amount on the right front wheel, b at FR (Front Right) is the estimated wear amount for the right front wheel, a at RL (Rear Left) is the measured wear amount for the left rear wheel, b at RL (Rear Left) is the estimated wear amount for the left rear wheel , a at RR (Rear Right) is the measured wear amount for the right rear wheel, and b at RR (Rear Right) is the estimated wear amount for the right rear wheel.

For example, during actual vehicle testing over 45,000 km, the measured wear on tire (10) was 5.07 mm at FL, while the estimated wear was 4.83 mm, resulting in an error of 0.24 mm.

Furthermore, the measured wear at FR was 5.42 mm, and the estimated wear was 4.81 mm, with an error of 0.61 mm.

Additionally, the measured wear amount at RL was 2.06 mm, and the estimated wear amount was 2.77 mm, with an error of 0.71 mm.

Furthermore, the measured wear amount for RR is 2.57 mm, and the estimated wear amount is 2.03 mm, with an error of 0.54 mm.

Accordingly, when estimating the tire (10) wear amount over 45,000 km of vehicle travel using the tire wear estimation method of the present invention utilizing the effective rotational radius, results showing an error within 1 mm can be obtained for both the front and rear tires on both sides.

Meanwhile, the tire wear condition display device may include a calculation unit that performs the tire wear estimation method using the effective rotation radius of the present invention to calculate the wear amount of the tire (10), and a display that receives information about the wear amount of the tire (10) from the calculation unit and displays the wear condition of the tire (10).

Furthermore, the tire wear condition management system may include a warning device that displays a warning signal when the tire wear amount exceeds a preset threshold value, based on information about the tire wear amount received from the tire wear condition display device and computational unit.

Here, each of the steps S110 to S150 and steps S210 to S230 described above may be performed by the processing unit included in the tire wear condition display device.

As seen above, the tire wear estimation method utilizing the effective rotation radius of the present invention can estimate the wear amount of the tire (10) by tracking the trend line of the tire wear factor ERR using a wheel speed sensor and TMS, which are sensors capable of measuring the rotational speed of the tire (10), and a GPS capable of measuring the linear speed of the tire (10).

Although ERR varies depending on the tire's (10) air pressure and load conditions, it can be tracked using a formula that converts ERR to a Reference ERR based on the Reference.

Here, as the tire (10) wears, the ERR initially increases and then decreases.

Accordingly, in the tire wear estimation method using the effective rotation radius of the present invention, the wear of the tire (10) is estimated using a mileage-based wear curve during the initial phase where the ERR increases. Conversely, during the phase where the ERR decreases, the wear is estimated using a linear relationship equation between the ERR and the wear amount of the tire (10).

By dividing the ERR into increasing and decreasing segments and estimating tire (10) wear using different methods for each segment, the tire wear estimation method of the present invention utilizing the effective rotation radius can achieve higher estimation accuracy as tire (10) wear progresses.

Although the present invention was described with reference to limited drawings, the above description is provided as an exemplary example of the present invention, and it should be understood that the present invention may be easily modified in other various ways without changing the spirit or the necessary features of the present invention by those skilled in the art. Therefore, the examples described above are only exemplary and should not be construed as being limitative in all respects. For example, the components described as single parts may be divided and the components described as separate parts may be integrated. Further, the techniques described above may be performed in a different order from the described method.

Although certain embodiments and implementations have been described herein, other embodiments and modifications will be apparent from this description. Accordingly, the inventive concepts are not limited to such embodiments, but rather to the broader scope of the appended claims and various obvious modifications and equivalent arrangements as would be apparent to a person of ordinary skill in the art.

[Reference Signs List]

10: Tire

110: Tire condition sensing unit

112: tire mounted sensor

114: GPS sensor

120: Tire condition data receiving unit

130: database unit

140: processing unit

150: tire wear estimation unit

160: display unit

170: vehicle ECU (Electronic control unit)

210: tire

220: tire mounted sensor

**Claims**

1. A tire wear estimation device comprising:

   a tire condition sensing unit positioned inside a vehicle or a tire mounted on a vehicle, measuring condition data of the tire including acceleration of the tire, tire air pressure, linear velocity at the center of the tire, and driving mileage;
   a tire condition data receiving unit that receives the condition data from the tire condition sensing unit;
   a database unit storing the received tire condition data, the average wear rate of the tire, and a wear estimation model;
   a processing unit that calculates the effective rolling radius based on the angular velocity derived from the tire's acceleration and the tire's linear velocity among the condition data, and calculates the tire contact length based on the tire's acceleration; and
   a tire wear estimation unit that estimates the first tire wear amount by inputting the effective rolling radius and tire contact length from the processing unit and the tire air pressure from the tire condition data receiving unit into the pre-stored wear estimation model;
   wherein the tire wear estimation unit outputs the final wear state of the tire during the vehicle's driving by estimating the second tire wear amount based on the estimated first tire wear amount, the driving mileage, and the pre-stored average wear rate.

2. According to claim 1,
   the wear estimation model is generated by inputting learning data, including multiple tire effective rotation radii, tire air pressures, and tire contact lengths, which are either pre-stored or received from an external source, into a machine learning model.

3. According to claim 1,
   the tire wear estimation device further comprising a display unit that displays the second tire wear amount of the tire to the driver.

4. According to claim 1,
   the tire wear estimation device further comprising a vehicle electronic control unit (ECU) that performs control of the vehicle based on the final wear state of the tire.

5. According to claim 1,
   the tire condition sensing unit comprises a TMS (Tire Mounted Sensor) acceleration sensor mounted inside the tire and a GPS sensor mounted on the vehicle.

6. According to claim 1
   the tire wear estimation unit defines a plurality of wear levels based on the range of the first tire wear amount, and accordingly changes the estimation method for the second tire wear amount to perform estimation.

7. A tire wear estimation method comprising:

a calculation step of calculating an effective rolling radius based on the angular velocity derived from the tire acceleration and the tire linear velocity among the condition data, and calculating the tire contact length based on the tire acceleration;

a receiving step of receiving the state data from the tire state sensor unit;

a calculating step of calculating an effective rolling radius based on the angular velocity derived from the acceleration of the tire among the state data and the linear speed of the tire, and calculating a tire contact length based on the acceleration of the tire;

a first tire wear estimation step of estimating the first tire wear amount by inputting the effective rolling radius, tire contact length, and tire air pressure into a pre-stored wear estimation model; and

a second tire wear estimation step of estimating the second tire wear amount based on the estimated the first tire wear amount, the tire mileage, and a pre-stored average wear rate, and outputting the final wear state of the tire during the vehicle's operation.

8. According to claim 7,

the acceleration is x-direction acceleration and z-direction acceleration measured by the tire condition sensing unit during one rotation of the tire while supporting the load of the vehicle during driving and being in a deformed state,

wherein the contact length is derived by calculating the distance from the first positive peak to the second positive peak of the x-direction acceleration, or the distance from the first positive peak to the second positive peak of the derivative of the z-direction acceleration, during one revolution of the tire.

9. According to claim 8,

the effective rotational radius ($R_e$) is derived based on the linear velocity (V) at the tire center and the angular velocity ($\Omega$) derived from the x-direction acceleration and z-direction acceleration according to <Equation 1>.

<Equation 1>

$$R_e = \frac{V}{\Omega}$$

10. According to claim 7,

the tire wear estimation step further comprising an estimating step of defining a plurality of wear levels based on the range of the first tire wear amount, and accordingly varying the estimation method for the second tire wear amount.

Fig 1

Fig 2

220

210

(a)

(b)

Fig 3

```
                        ┌─────────┐
                        │  Start  │
                        └────┬────┘
                             │
                             ▼
   ┌──────────────────────────────────────────────────┐
   │ calculating an effective rolling radius based on  │
   │ the angular velocity derived from the tire        │      S310
   │ acceleration and the tire linear velocity among   │
   │ the condition data, and calculating the tire      │
   │ contact length based on the tire acceleration     │
   └──────────────────────┬───────────────────────────┘
                             │
                             ▼
   ┌──────────────────────────────────────────────────┐
   │ receiving the state data from the tire state      │      S320
   │ sensor unit                                       │
   └──────────────────────┬───────────────────────────┘
                             │
                             ▼
   ┌──────────────────────────────────────────────────┐
   │ calculating an effective rolling radius based on  │
   │ the angular velocity derived from the             │
   │ acceleration of the tire among the state data     │      S330
   │ and the linear speed of the tire, and calculating │
   │ a tire contact length based on the acceleration   │
   │ of the tire                                       │
   └──────────────────────┬───────────────────────────┘
                             │
                             ▼
   ┌──────────────────────────────────────────────────┐
   │ estimating the first tire wear amount by          │
   │ inputting the effective rolling radius, tire      │      S340
   │ contact length, and tire air pressure into a      │
   │ pre-stored wear estimation model                  │
   └──────────────────────┬───────────────────────────┘
                             │
                             ▼
   ┌──────────────────────────────────────────────────┐
   │ estimating the second tire wear amount based on   │
   │ the estimated the first tire wear amount, the     │
   │ tire mileage, and a pre-stored average wear rate, │      S350
   │ and outputting the final wear state of the tire   │
   │ during the vehicle's operation                    │
   └──────────────────────┬───────────────────────────┘
                             │
                             ▼
                        ┌─────────┐
                        │ Finish  │
                        └─────────┘
```

FIG 4

(a)

(b)

FIG 5

FIG 6

FIG 7

**\<Tire wear estimation model\>**

ERR

tread wear amount =
f($R_e$, air pressure, contact length)

[Intelligent tire x-axis signal]

FIG 8

**Tire wear amount - Mileage (235/60R18 RA33)**

Fig 9

<Tire wear estimation model>

Tire mounted sensor

GPS velocity sensor

GPS mileage

ERR

tread wear amount = f($R_e$, air pressure, contact length)

[Intelligent tire x-axis singal]

(a)

estimated wear amount based on ERR

<Final wear estimation>

ERR & Mileage (model switch)

1. 0mm~2mm
2. 2mm~4mm
3. 4mm~7mm

(c)

updated tire wear amount range = (Estimated wear amount) / (mileage)

(b)

previous estimated wear amount

Tire tread wear amount

Fig 10

$$R_{new} > R_{wear}$$

Fig 11

Fig 12

```
                          ┌──────────┐
                          │  Start   │
                          └────┬─────┘
                               │
   ┌ ─ ─ ─ ─ ─ ─ ─ ─ ─ ─ ─ ─ ─ ┼ ─ ─ ─ ─ ─ ─ ─ ─ ─ ─ ─ ─ ─ ┐
   │                           ▼                              │
          ┌─────────────────────┐        ┌─────────────┐
S110   │  │  Data filtering &   │◄───────╱   Wear      ╱  │      S150
          │    ERR tracking     │       ╱   output    ╱
   │      └──────────┬──────────┘      └─────────────┘   │
                     │
   │                 ▼                                    │   ERR increasing range
          ┌─────────────────────┐
S120   │① │  ERR compensation   │                         │
          │    based on CR      │
   │      └──────────┬──────────┘                         │
                     │                    ┌─────────────┐
   │                 ▼              Yes   │    Wear -   │ │
              ◇──────────────◇───────────►│   mileage   │         S140
S130   │     ERR increase?               │    curve    │ │
              ◇──────────────◇            └─────────────┘
   │                 │ No                                 │
   └ ─ ─ ─ ─ ─ ─ ─ ─ ┼ ─ ─ ─ ─ ─ ─ ─ ─ ─ ─ ─ ─ ─ ─ ─ ─ ─ ┘
   ┌ ─ ─ ─ ─ ─ ─ ─ ─ ┼ ─ ─ ─ ─ ─ ─ ─ ─ ─ ┐
   │                 ▼                     │
          ┌─────────────────────┐
S210   │  │  ERR compensation   │          │
          │    based on CR      │
   │      └──────────┬──────────┘          │
                     │
   │                 ▼                     │   ERR decreasing range
          ┌─────────────────────┐
S220   │  │    Wear = f(ERR)    │          │
          └──────────┬──────────┘
   │                 │                     │
                     ▼
   │        ┌─────────────┐                │
S230   │    ╱   Wear      ╱
            ╱   output    ╱                │
   │        └──────┬──────┘
                   │                       │
   │               ▼
              ┌──────────┐                 │
   │          │   End    │
              └──────────┘                 │
   └ ─ ─ ─ ─ ─ ─ ─ ─ ─ ─ ─ ─ ─ ─ ─ ─ ─ ─ ┘
```

Fig 13

Fig 14

Fig 15

# INTERNATIONAL SEARCH REPORT

International application No.

**PCT/KR2024/005143**

**A. CLASSIFICATION OF SUBJECT MATTER**

**B60C 11/24**(2006.01)i; **G01C 21/10**(2006.01)i; **B60C 23/04**(2006.01)i; **B60C 23/06**(2006.01)i; **G06F 17/11**(2006.01)i

According to International Patent Classification (IPC) or to both national classification and IPC

**B. FIELDS SEARCHED**

Minimum documentation searched (classification system followed by classification symbols)

B60C 11/24(2006.01); B60C 19/00(2006.01); B60C 23/04(2006.01); G01M 17/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 타이어 상태 센싱부(tire condition sensor), 타이어 상태데이터 수신부(tire condition data receiver), 데이터베이스부(database), 프로세싱부(processor), 타이어 마모 추정부(tire wear estimator)

**C. DOCUMENTS CONSIDERED TO BE RELEVANT**

| Category* | Citation of document, with indication, where appropriate, of the relevant passages | Relevant to claim No. |
|---|---|---|
| A | KR 10-2019-0105505 A (SENSATA TECHNOLOGIES, INC.) 17 September 2019 (2019-09-17)<br>See paragraphs [0001]-[0041]; claim 1; and figures 1-6. | 1-10 |
| A | JP 2021-154792 A (BRIDGESTONE CORP.) 07 October 2021 (2021-10-07)<br>See paragraphs [0001]-[0024]; claim 1; and figures 1-12. | 1-10 |
| A | KR 10-2021-0040218 A (HANKOOK TIRE & TECHNOLOGY CO., LTD. et al.) 13 April 2021 (2021-04-13)<br>See claims 1-6; and figures 1-11. | 1-10 |
| A | JP 2021-185085 A (TOYO TIRE CORP.) 09 December 2021 (2021-12-09)<br>See claims 1-9; and figures 1-5. | 1-10 |
| A | JP 2021-533029 A (BRIDGESTONE EUROPE NV./SA.) 02 December 2021 (2021-12-02)<br>See claims 1-14; and figures 1-8. | 1-10 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **18 July 2024** | **19 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 725 717 A1

| | INTERNATIONAL SEARCH REPORT<br>Information on patent family members | | | International application No.<br>**PCT/KR2024/005143** | |

| Patent document<br>cited in search report | | | Publication date<br>(day/month/year) | Patent family member(s) | | | Publication date<br>(day/month/year) |
|---|---|---|---|---|---|---|---|
| KR | 10-2019-0105505 | A | 17 September 2019 | CN | 110228333 | A | 13 September 2019 |
| | | | | CN | 110228333 | B | 13 January 2023 |
| | | | | DE | 102019104662 | A1 | 05 September 2019 |
| | | | | GB | 2572250 | A | 25 September 2019 |
| | | | | GB | 2572250 | B | 12 August 2020 |
| | | | | US | 10518590 | B2 | 31 December 2019 |
| | | | | US | 2019-0270347 | A1 | 05 September 2019 |
| JP | 2021-154792 | A | 07 October 2021 | CN | 115315622 | A | 08 November 2022 |
| | | | | EP | 4124842 | A1 | 01 February 2023 |
| | | | | JP | 7319940 | B2 | 02 August 2023 |
| | | | | US | 2023-0070044 | A1 | 09 March 2023 |
| | | | | WO | 2021-192474 | A1 | 30 September 2021 |
| KR | 10-2021-0040218 | A | 13 April 2021 | CN | 112590463 | A | 02 April 2021 |
| | | | | CN | 112590463 | B | 04 November 2022 |
| | | | | EP | 3800072 | A1 | 07 April 2021 |
| | | | | EP | 3800072 | B1 | 22 March 2023 |
| | | | | JP | 2021-059325 | A | 15 April 2021 |
| | | | | JP | 7026184 | B2 | 25 February 2022 |
| | | | | KR | 10-2255677 | B1 | 27 May 2021 |
| | | | | US | 11807046 | B2 | 07 November 2023 |
| | | | | US | 2021-0101416 | A1 | 08 April 2021 |
| JP | 2021-185085 | A | 09 December 2021 | EP | 3950389 | A1 | 09 February 2022 |
| | | | | EP | 3950389 | A4 | 07 December 2022 |
| | | | | EP | 3950389 | B1 | 24 April 2024 |
| | | | | JP | 2020-164126 | A | 08 October 2020 |
| | | | | JP | 2022-133305 | A | 13 September 2022 |
| | | | | JP | 7065241 | B2 | 11 May 2022 |
| | | | | JP | 7194066 | B2 | 21 December 2022 |
| | | | | US | 11772432 | B2 | 03 October 2023 |
| | | | | US | 2021-0402829 | A1 | 30 December 2021 |
| | | | | WO | 2020-203233 | A1 | 08 October 2020 |
| JP | 2021-533029 | A | 02 December 2021 | CN | 112533775 | A | 19 March 2021 |
| | | | | CN | 112533775 | B | 26 August 2022 |
| | | | | EP | 3833553 | A1 | 16 June 2021 |
| | | | | EP | 3833553 | B1 | 08 March 2023 |
| | | | | IT | 201800007884 | A1 | 06 February 2020 |
| | | | | JP | 7079373 | B2 | 01 June 2022 |
| | | | | US | 11458777 | B2 | 04 October 2022 |
| | | | | US | 2021-0188017 | A1 | 24 June 2021 |
| | | | | WO | 2020-031022 | A1 | 13 February 2020 |

Form PCT/ISA/210 (patent family annex) (July 2022)

**EP 4 725 717 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20210302272

- KR 101741730